# EUROPEAN PATENT APPLICATION

(11) **EP 4 261 407 A1**
(43) Date of publication of application: **18.10.2023**
(21) Application number: 22167754.5
(22) Date of filing: 12.04.2022
(51) Int. Cl.: F03D 7/04

(54) **CONTROL SYSTEM FOR CONTROLLING AT LEAST ONE WIND TURBINE OF A PLURALITY OF WIND TURBINES IN A WIND PARK**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

The present invention describes a control system (100) for controlling at least one wind turbine (10) of a plurality of wind turbines (10, 360, 370, 380) in a wind park (314). The control system (100) comprises a wind direction measuring device (110) configured for measuring an absolute wind direction at the wind turbine (10), a determining device (120) configured for determining whether the absolute wind direction is within a defined wind direction value range (111), wherein the defined wind direction value range (111) comprises at least one sector in which at least one other downstream wind turbine (360) is positioned in a wake region (349) caused by the wind turbine (10), and is positioned within a maximum distance of consideration (369) with respect to the wind turbine (10) and/or the wind turbine (10) is positioned in a wake region (379) caused by at least one other upstream wind turbine (370) which is positioned within the maximum distance of consideration (369) with respect to the wind turbine (10), and a controller (130) configured for applying a first control setting to the wind turbine (10) if the absolute wind direction is outside of the defined wind direction value range (111) or a second control setting to the wind turbine (10) if the absolute wind direction is within the defined wind direction value range (111), wherein the first control setting is different from the second control setting.

## Description

### Field of invention

The present invention relates to the field of controlling at least one wind turbine of a plurality of wind turbines in a wind park. Particularly, the present invention relates to a control system for controlling at least one wind turbine of a plurality of wind turbines in a wind park, a wind park comprising a plurality of wind turbines and a control system, and a method of controlling at least one wind turbine of a plurality of wind turbines in a wind park.

### Art Background

Today the choice of power and rotor speed control settings mostly has been optimized on a single turbine level and has not been adjusted to whether the turbine is waked or is waking other turbines. Some control settings are functions of measured turbulence conditions, e.g., consisting of more aggressive pitch settings in above-rated wind speeds, and are only activated in low turbulence conditions. Some park control features, e.g., Wake Adapt in onshore applications, use less aggressive control settings, e.g., reduced pitch angles, to increase wake velocity in order to increase power production on downstream turbines. The upstream turbine may lose power, but the goal is to increase overall park power production. However, in line with the effects of reduced turbulent-mixing wake recovery and non-uniformity of the wake velocity increase, this has been shown to be beneficial in parks with close wind turbine spacing. Additionally, the benefit is usually smaller than predicted by simplified wake models neglecting one or more of the effects.

### Summary of the Invention

It may be an objective of the present invention to provide a control system for controlling at least one wind turbine of a plurality of wind turbines in a wind park, a wind park comprising a control system, and a method for controlling at least one wind turbine in a wind park, wherein the control system for controlling and the method for controlling are able to increase the annular energy production of the wind park and to reduce maintenance of the wind park.

This objective may be solved by the control system for controlling at least one wind turbine of a plurality of wind turbines in a wind park, a wind park comprising the control system, and a method for controlling at least one wind turbine of a plurality of wind turbines in a wind park according to the independent claims.

According to an aspect of the present invention, a control system for controlling at least one wind turbine of a plurality of wind turbines in a wind park is described. The control system comprises (a) a wind direction measuring device configured for measuring an absolute wind direction at the wind turbine, (b) a determining device configured for determining whether the absolute wind direction is within a defined wind direction value range, wherein the defined wind direction value range comprises at least one sector in which at least one other downstream wind turbine is positioned in a wake region caused by the wind turbine, wherein the other downstream wind turbine is positioned downstream of the wind turbine relative to a wind direction of an incoming wind field, and is positioned within a maximum distance of consideration with respect to the wind turbine and/or the wind turbine is positioned in a wake region caused by at least one other upstream wind turbine which is positioned upstream of the wind turbine relative to the wind direction of the incoming wind field, and which is positioned within the maximum distance of consideration with respect to the wind turbine, and (c) a controller configured for applying a first control setting to the wind turbine if the absolute wind direction is outside of the defined wind direction value range or a second control setting to the wind turbine if the absolute wind direction is within the defined wind direction value range, wherein the first control setting is different from the second control setting.

The control system according to the present invention may represent a no-regret option avoiding wake-induced high-load conditions and hard-to-predict adverse production effects (possible power reduction) on downstream turbines. Further, the control system may be based on a method which only requires accurate absolute wind direction measurement. The absolute wind direction is used to describe a wind direction relative to North. The control system may avoid more advanced wake modelling and more advanced measurement of wind conditions affecting wakes, in order to predict load impact on the waked turbines and the production effect on a park level as it is the case when using other methodologies that are allowing control settings comprising an increased thrust coefficient ("aggressive settings") in combination with wake interactions. Thereby, the control system may use simple modelling to find the sectors (defined wind direction value range) to avoid.

Additionally, a (incrementally) more advanced wake modelling (e.g., higher-order models for wake expansion and/or turbulence intensity) can be used to define the sectors in which the first control setting ("aggressive setting") may be applied in a more precise way. Alternatively, the control system may be used in a conservative way by using the linear expansion model with a high value for the expansion coefficient K.

The control system according to the present invention may be based on the idea that if a wind turbine is not waking another wind turbine and at the same time is not waked by another wind turbine different control settings may be applied than if the wind turbine is waking another wind turbine and/or is waked by another wind turbine. Different control settings may be applied to a wind turbine X in relation to whether the wind turbine X is waked by another wind turbine Y (wind turbine X is downstream of wind turbine Y and wind turbine Y's wake overlaps with the rotor of turbine X) or if wind turbine X is waking wind turbine Z (wind turbine Z is downstream of wind turbine X and wind turbine X's wake overlaps with the rotor of wind turbine Z), and the associated uncertainty of these effects. Hence, the control system may be based on the idea that when a wind turbine is not waked by another upstream wind turbine and at the same time is not waking another downstream wind turbine, different control settings comprising increased thrust coefficient may be applied which allow a higher thrust on the wind turbine. Thereby, an increased annular energy production of the entire wind park may be providable.

Advantageously, the control system may provide a robust and reliable control system for controlling at least one wind turbine in a wind park allowing an increased annular energy production of the wind park.

Particularly, applying the first control settings comprising an increased thrust coefficient compared to the second control setting may allow a higher power production of the wind turbine by e.g., decreasing the pitch angles of the wind turbine blades. As a side effect, these control setting increase thrust forces in the wind turbine rotor. Using the "aggressive control settings", the thrust coefficient respectively the thrust may be increased. This has two consequences. First, the mechanical loads on the rotor and the rotor-supporting structure, e.g., drivetrain, nacelle, tower, and on the wind turbine itself is increased. Second, the wind velocity just behind the rotor respectively the blades is reduced. The increased mechanical loads on the wind turbine may influence the wind turbine particularly in the case in which the wind turbine is already experiencing higher loads caused by operating the wind turbine in the wake of another upstream wind turbine causing increased turbulence levels compared to non-waked conditions, and non-uniform inflow conditions. At the same time the turbulence in the wake just behind the rotor is increased. This changes in the wind conditions may be seen on a downstream wind turbine standing in the wake region of the upstream wind turbine using the more aggressive control settings.

According to this application the term "absolute wind direction" may particularly denote a wind direction relative to North.

At each of the at least one wind turbine in the wind park, a wind direction measuring device may be provided.

According to this application the term "downstream wind turbine" may particularly denote any wind turbine which is located downstream of a controlled wind turbine in the direction of the current wind direction of the incoming wind field.

Furthermore, the term "upstream wind turbine" may particularly denote any wind turbine which is located upstream of a controlled wind turbine in the direction of the current wind direction of the incoming wind field.

In general, at least one other downstream wind turbine is positioned in a wake region caused by the wind turbine, if the other downstream wind turbine is located downstream of the wind turbine taking into account the diameter of the wind turbine (e.g., the diameter of the rotor blades) and optionally allowing an expansion of the wind effected region downstream of the wind turbine. Furthermore, the other downstream wind turbine may be required to be located within a maximum distance of consideration away from the wind turbine to be considered as positioned in a wake region.

Furthermore, at least one wind turbine is positioned in a wake region caused by at least one other upstream wind turbine, if the wind turbine is located downstream of at least one upstream wind turbine taking into account the diameter of the other upstream wind turbines (e.g., the diameter of the rotor blades) and optionally allowing an expansion of the wind effecting region downstream of the wind turbine. Furthermore, the wind turbine may be required to be located within a maximum distance of consideration away from the other upstream wind turbine to be considered as positioned in a wake region.

The term "maximum distance of consideration" may particularly denote a threshold distance away from another wind turbine to be considered to be located within the wake region caused by the other wind turbine. This is caused by the fact that the influence of the rotor blade to the wind conditions are largest just behind the rotor blades. A certain distance away from the rotor blades, the wake may be mixed with the free stream which does not pass through the rotor blades, such that the wake effects may no longer be evaluated. This is usually a multiple of the rotor diameter of the upstream wind turbine.

The defined wind direction value range may comprise at least one sector according to the present invention may denote that the defined wind direction value range may comprise one sector which is an interconnected value range extending over a specific angular extension. On the other hand, two or more sectors which are discrete and distanced from each other and may together form the defined wind direction value range. In other words, the defined wind direction value range may comprise two or more non continuous sub ranges.

In general, the term "control setting" may particularly denote a blade pitch angle and/or a rotor speed relative to the wind speed. The blade pitch angle of one or more blades may be adjusted by the controller. Alternatively or additionally, the rotor speed relative to the wind speed of the incoming wind field may be adjusted at the wind turbine.

The first control setting and the second control setting may comprise a definition, such as set points, of one or more operational parameters. The first control setting is different from the second control setting. The first control setting and the second control setting may comprise set points of the same control parameters, but the values of the set points may be different. The first control setting and/or the second control setting may have been previously determined or may be determined online during operation of the control system.

If the first control setting and/or the second control setting have been determined previously (for different wind conditions), the respective control setting may be looked up for example from an electronic data structure, for example look-up table, depending on the current wind direction of the incoming wind field during operation of the control system. Thereby, the control system may be operatable in a fast and reliable manner.

According to a further aspect of the present invention, a wind park is described. The wind park comprises a plurality of wind turbines, and an above-described control system.

The control system may be a park control system controlling plural wind turbines comprised in the wind park. Alternatively, the control system may be a respective wind turbine control system associated with a respective one of the plurality of wind turbines in the wind park. The at least one wind turbine may be any wind turbine of the plurality of wind turbines and the control system may control (successively or in parallel) all wind turbines of the plurality of wind turbines as the wind turbine. In other words, the controller applying the control settings, i.e., switching between the first control setting ("aggressive control setting") and the second control setting ("non-aggressive control setting") may be implemented on wind park level with a centralized wind park server commanding all wind turbines of the wind park or on wind turbine level through turbine-specific parameter settings defining the wind direction value range (different sectors) .

The wind park comprising the above-described control system may be based on the idea that if a wind turbine is not waking another wind turbine and/or is not waked by another wind turbine different control settings may be applied than if the wind turbine is waking another wind turbine or is waked by another wind turbine. Different control settings may be applied to a wind turbine X in relation to whether the wind turbine X is waked by another wind turbine Y (wind turbine X is downstream of wind turbine Y and wind turbine Y's wake overlaps with the rotor of turbine X) or if wind turbine X is waking wind turbine Z (wind turbine Z is downstream of wind turbine X and wind turbine X's wake overlaps with the rotor of wind turbine Z), and the associated uncertainty of the effects. Hence, the wind park may be based on the idea that as long as a wind turbine is not waked by another upstream wind turbine and/or is not waking another downstream wind turbine, different control settings may be applied which allow a higher thrust coefficient and therefore a higher annular energy production of the entire wind park.

Advantageously, a wind park having an increased annular energy production may be providable.

According to a further aspect of the present invention, a method of controlling at least one wind turbine of a plurality of wind turbines in a wind park is described. The method comprises (a) measuring an absolute wind direction at the wind turbine, (b) determining whether the absolute wind direction is within a defined wind direction value range, wherein the defined wind direction value range comprises at least one sector in which at least one other downstream wind turbine is positioned in a wake region caused by the wind turbine, wherein the other downstream wind turbine is positioned downstream of the wind turbine relative to a wind direction of an incoming wind field, and is positioned within a maximum distance of consideration with respect to the wind turbine and/or the wind turbine is positioned in a wake region caused by at least one other upstream wind turbine which is positioned upstream of the wind turbine relative to a wind direction of an incoming wind field, and which is positioned within the maximum distance of consideration with respect to the wind turbine, and (c) applying a first control setting to the wind turbine if the absolute wind direction is outside of the defined wind direction value range or (d) applying a second control setting to the wind turbine if the absolute wind direction is within the defined wind direction value range, wherein the first control setting is different from the second control setting.

The method of controlling at least one wind turbine of a plurality of wind turbines in a wind park may be based on the idea that if a wind turbine is not waking another wind turbine and/or is not waked by another wind turbine different control settings may be applied than if the wind turbine is waking another wind turbine or is waked by another wind turbine. Different control settings may be applied to a wind turbine X in relation to whether the wind turbine X is waked by another wind turbine Y (wind turbine X is downstream of wind turbine Y and wind turbine Y's wake overlaps with the rotor of turbine X) or if wind turbine X is waking wind turbine Z (wind turbine Z is downstream of wind turbine X and wind turbine X's wake overlaps with the rotor of wind turbine Z), and the associated uncertainty of the effects. Hence, the wind park may be based on the idea that as long as a wind turbine is not waked by another upstream wind turbine and/or is not waking another downstream wind turbine, different control settings may be applied which allow a higher thrust coefficient and therefore a higher annular energy production of the entire wind park.

Advantageously, a robust and reliable method may be providable allowing to increase the annular energy production of a wind park.

According to a further exemplary embodiment of the present invention, the first control setting comprises an increased thrust coefficient, particularly at a given wind speed of an incoming wind field, compared to the second control setting.

Applying an increased thrust coefficient may allow an increased thrust on the wind turbine and therefore an increased power production of the wind turbine. At the same time mechanical loads on the wind turbine are increased and the wind velocity behind the rotor is reduced such that the turbulence in the wake is increased. By applying the increased thrust coefficient to the wind turbine which is not waking another wind turbine and/or not waked by another wind turbine, the beneficial higher power production may be used. At the same time the more detrimental results (e.g., reduced velocity, increased turbulence and increased mechanical loads) may be limited to an extent that does not negatively influence other wind turbines. At the same time the higher mechanical loads on the wind turbine may be absorbed by the wind turbine because no other additional loads induced by wakes of other wind turbines, are influencing the wind turbine.

Therefore, the power production of the wind turbine may be increased and at the same time emergency shut-downs due to too high loads on the wind turbine or reduced lifetime due to increased damage to components may be avoided.

According to a further exemplary embodiment of the present invention, the first control setting comprises a first set point of an a blade pitch angle, and the second control setting comprises a second set point of the blade pitch angle, and wherein the first set point is different from the second set point.

The term "set point" according to the present invention may denote a specific value of an operational parameter. The "operational parameter" according to the present invention may denote a parameter by which the operation of the wind turbine may be influenced.

The blade pitch angle may denote the blade pitch angle of one or more blades of the wind turbine.

All blades may be set to the same blade pitch angle dependent on the wind direction measured at the wind turbine and being used for all blades. Thereby, an easy and fast control signal may be used.

Alternatively, each of the blades may be set to a specific blade pitch angle dependent on the specific wind direction measured at each of the blades. Thereby, an accurate blade pitch angle for each rotor blade may be providable. Hence, the power production of the wind turbine may be further increased.

According to a further exemplary embodiment of the invention, the first set point is smaller than the second set point.

The first set point of the blade pitch angle being smaller than the second set point of the blade pitch angle may allow the wind turbine to extract more energy from the wind when the wind turbine is not waking any other wind turbine and is not waked by any other wind turbine. Hence, the power production of the wind turbine and therefore of the wind park is increased.

By applying a smaller blade pitch angle, the wind turbine may be operated by a more "aggressive" control setting. Thereby, a higher power production of the wind turbine may be possible. At the same time the higher loads on the wind turbine may be absorbed by the wind turbine and the reduced wind velocity as well as the increased turbulences in the wake may not influence any other wind turbine. Hence, the power production of the entire wind park may be increased.

According to a further exemplary embodiment of the present invention, the first set point is smaller than 10°, in particular smaller than 5°, further in particular substantially 0°.

The first set point being in the above-defined ranges may provide a good balance between an increased power production and increased mechanical loads.

The first set point being substantially equal 0° may provide a further increased power production.

According to a further exemplary embodiment of the present invention, the first control setting comprises a further first set point of a rotor speed, and the second control setting comprises a further second set point of the rotor speed, wherein the further first set point is different from the further second set point.

The rotor speed may particularly be set relative to a wind speed of the incoming wind field.

According to a further exemplary embodiment of the present invention, the further first set point is larger than the further second set point.

An increased rotor speed may result in a more "aggressive" control setting of the wind turbine. Hence, the further first set point of the rotor speed being larger than the further second set point of the rotor speed may allow the wind turbine to extract more energy from the incoming wind field. Therefore, the power production of the wind turbine is increased.

By applying at the same time, the first control setting such that the first set point is smaller than the second set point as well as such that the further first set point is larger than the further second set point, particularly in a well-balanced manner, the power production of the wind turbine may be optimized relative to a wind speed of an incoming wind field.

According to a further exemplary embodiment of the present invention, the control system further comprises a wake region determining device, wherein the wake region determining device is configured for determining the wake region caused by each of the plurality of wind turbines for each wind direction of the incoming wind field based on a position of each of the plurality of wind turbines in the wind park, and based on a model describing a direction and an expansion of a wake region of each of the plurality of wind turbines, wherein the wake region determining device is further configured for determining the defined wind direction value range for each of the plurality of wind turbines, and wherein the wake region determining device is further configured for communicating the defined wind direction value range to the determining device.

Particularly, the wake region determining device is configured for determining the defined wind direction value range for each wind turbine based on the determined wake region for each wind direction.

By determining the wake region caused by each of the plurality of wind turbines for each wind direction of the incoming wind field, a mapping of which wind turbine is waked or is waking for which wind direction may be efficiently providable.

The position of each of the plurality of wind turbines is a predefined and known value which may be stored in a memory of the wake region determining device.

By using a model describing a direction, an expansion and/or a turbulence intensity of a wake of each of the plurality of wind turbines, a respective wake region of the wind turbine may be efficiently mapped, particularly for each wind direction of the incoming wind field.

The defined wind direction value range may be determined for each wind turbine in advance for different wind directions. The respective values may be associated with a corresponding wind turbine. Thus, during operation of the control system, the respective defined wind direction value range may be looked up by the wake region determining device, e.g., in a look-up table. Thereby, the defined wind direction value range may be determined in a fast and reliable manner.

Communicating the defined wind direction value range to the determining device may be performed wirelessly or by a wired connection.

According to a further exemplary embodiment of the present invention, the model describing a direction and an expansion of a wake is a Jensen wake model or a Gaussian wake model.

Using the Jensen wake model or the Gaussian wake model may provide a simple, fast, and computing power saving wake model which may be simple to implement.

The Jensen wake model comprises assuming an expansion of the wake-affected region from the rotor of an upstream wind turbine i that is linear with a downstream distance (namely, a distance along the wind direction). An expansion coefficient κ may be chosen between 0.05 and 0.075 (default κ = 0.065). As the wake recovers to ambient conditions, a maximum distance of consideration may be chosen in which the wake effect may be evaluated. This may be a multiple of the rotor diameter of the upstream wind turbine. The wake may be extended to a maximum distance of consideration of xₘₐₓ = 25Dᵢ.

When using wake steering, the trajectory of the wake centreline, which in the Jensen wake model is straight along the wind direction, may be adjusted to reflect wake steering. Example models for the wake deflection as a function of yaw offset on an upstream wind turbine are given, e.g., in "A. Jimenez, A. Crespo, and E. Migoya. Application of a LES technique to characterize the wake deflection of a wind turbine in yaw. Wind Energy, 13(6):559-572, 2010."

Further, it may be evaluated whether there is an overlap (A^{ol} > 0) with a rotor of a downstream wind turbine j, indicating that wind turbine i is waking wind turbine j.

According to a further exemplary embodiment of the present invention, the maximum distance of consideration is 50 times a rotor diameter of the wind turbine, particularly is 25 times a rotor diameter of the wind turbine.

Defining the maximum distance of consideration to be 25 times the rotor diameter of the wind turbine may ensure that outside of the maximum distance of consideration the wake turbulences are equalized by mixing with the wind field behind the rotor. Thereby, a wake effect introduced by the wind turbine may be equalized. Thereby, the wake effect is limited, and a downstream wind turbine being positioned in the wake region and more than 25 times the diameter away from the wind turbine may be considered to be positioned outside of the wake region caused by the wind turbine. Hence, the other downstream wind turbine may be seen to no longer been influenced by the wake region caused by the wind turbine because the reduced wind velocity and the increased turbulence may be ne-glectable small.

Hence, an increase power production may be providable because the other downstream wind turbine which is positioned more than 25 times the diameter of the rotor away from the wind turbine may be operatable with control settings comprising an increased thrust coefficient.

Defining the maximum distance of consideration to be 50 times the rotor diameter of the wind turbine may provide a conservative approach in which the power production may be increased and at the same time loads on the plurality of wind turbines may be decreased in a well-balanced manner.

For providing an even more conservative approach, additionally to defining the maximum distance of consideration to be 50 times the rotor diameter solely wind direction ranges above 2.5° are considered for applying the first control setting comprising an increased thrust coefficient.

According to a further exemplary embodiment of the present invention, the wind direction measuring device is configured for experimentally measuring the absolute wind direction, wherein particularly the wind direction measuring device comprises at least one of a group consisting of a wind direction sensor, an anemometer, and a lidar.

By experimentally measuring the absolute wind direction the absolute wind direction may be measured in a reliable and robust manner.

A wind direction sensor may comprise two different measuring positions on the wind turbine, e.g., on the nacelle in front of the rotor, wherein at each of the two different measuring positions the pressure of the incoming wind field is measured. By calculating a difference of the two pressure values, a wind direction of the incoming wind field may be determined.

An anemometer may be mounted to the nacelle of the wind turbine. Thereby, the wind direction of the incoming wind field may be measured fast and in a reliable manner.

A lidar (light detection and ranging) device may provide an exact wind direction value and may have a low susceptibility to noise.

According to a further exemplary embodiment of the present invention, the control system further comprises an actuation device, wherein the actuation device is configured for determining, if the absolute wind direction is outside the defined wind direction value range, a wind speed of an incoming wind field at the wind turbine and/or a turbulence intensity level at the wind turbine, wherein the controller is further configured for applying the first control setting if the wind speed is below a predetermined wind speed threshold and/or the turbulence intensity level is below a predetermined wind speed threshold, and wherein the controller is further configured for applying the second control setting if the wind speed is above the predetermined wind speed threshold and/or the turbulence intensity level is above the predetermined turbulence intensity level threshold.

If the wind speed exceeds the predetermined wind speed threshold and/or the turbulence density level exceeds the predetermined turbulence density level threshold, applying the first control setting comprising the increased thrust coefficient compared to the second control setting, may be reliably inhibited. Thereby, in conditions causing high load levels, a potential increase in loads on the wind turbine may be inhibited. In other words, whether an "aggressive control setting" is allowed may further be dependent on measured wind speed or turbulence levels, or any other conditions causing high load levels (e.g., no aggressive settings in high wind speed and/or turbulence).

Thereby, the first control setting may solely be applied if the loads introduced on the wind turbine due to external influences are not too high. Hence, a reliable and failsafe control system may be providable which increases the durability of the wind turbine and increases the power production of the entire wind park.

According to a further exemplary embodiment of the present invention, the control system is configured for activating an increased thrust coefficient setting ("aggressive setting") for at least one wind turbine that for a given wind direction is not waked by other upstream wind turbines and/or is not waking any downstream turbines. In this way, high loading when a wind turbine is waked by another turbine, and hard-to-predict effects on loads and power production on a downstream turbine may be avoided. The claimed control system may rely on an accurate absolute North wind direction measurement (absolute wind direction is used to describe wind direction relative to North). Based on the knowledge of the positioning of the wind turbines in the wind park, and a model describing the direction and expansion of the wake region of each wind turbine, specific wind direction sectors (wind direction value range) can be defined where a wind turbine is waking other downstream wind turbines or where a wind turbine is waked by an upstream wind turbine. These sectors are then excluded from the wind directions where an increased thrust coefficient setting can be used.

Further, the controller applying the first control setting or the second control setting, i.e., switching between "aggressive" and "non-aggressive" control, may be implemented on wind park level with a centralized wind park server commanding all wind turbines, or on wind turbine level through turbine-specific parameter settings defining the sectors.

An effect of a wake region caused by a wind turbine on a downstream wind turbine, and thus the overall effect on the wind park, may be challenging to predict because the effect of an increasing mechanical load on the wind turbine itself as well as the increased mechanical load on the downstream wind turbine experiencing the wake of the upstream wind turbine, and the reduced wind velocity as well as the increased wake turbulence behind the rotor are counter acting. The velocity at closer distance from the upstream wind turbine may be lower (mostly described by the axial induction factor a, which increases with increasing thrust), but the increased turbulence may enhance the mixing with the surrounding flow unaffected by the rotor (free stream). The increased mixing helps the recovery of the wake, increasing the wind velocity in the wake downstream of the wind turbine up to the free stream velocity. Which effect dominates depends on the distance to the downstream wind turbine and several wind conditions (e.g., wind speed, ambient turbulence levels and stability conditions), making it complex to predict the effects on the waked downstream turbine's power production (mostly being a function of the wind velocity) and loads (function of wind velocity and turbulence levels in the wake region).

It has to be noted that embodiments of the invention have been described with reference to different subject-matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject-matter also any combination between features relating to different subject-matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Figure 1: shows a wind turbine.
- Figure 2: shows a wind turbine and a control system according to an exemplary embodiment.
- Figure 3: shows a wind park according to an exemplary embodiment.
- Figure 4: shows graphs of the thrust coefficient dependent on the wind speed.
- Figure 5: schematically shows wind flow characteristics up-stream and downstream of a wind turbine causing a wake region.
- Figure 6: schematically shows a wake region of an upstream wind turbine influencing a downstream wind turbine.

### Detailed Description

The illustrations in the drawings are schematically. It is noted that in different figures, similar or identical elements are provided with the same reference signs.

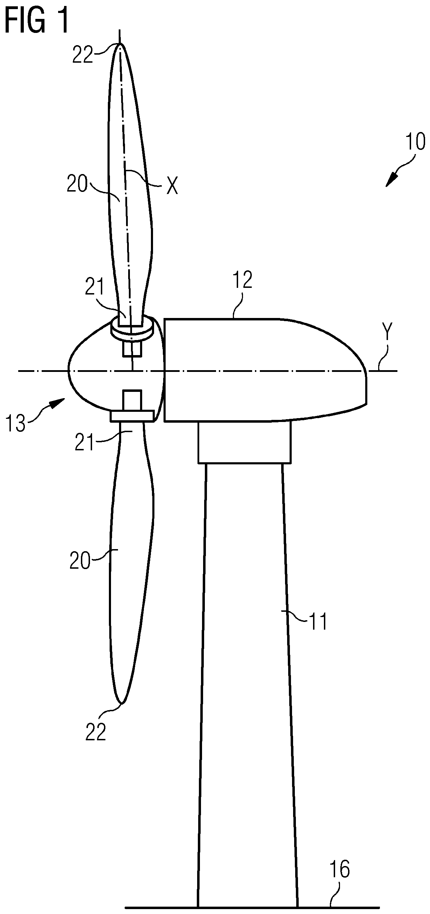

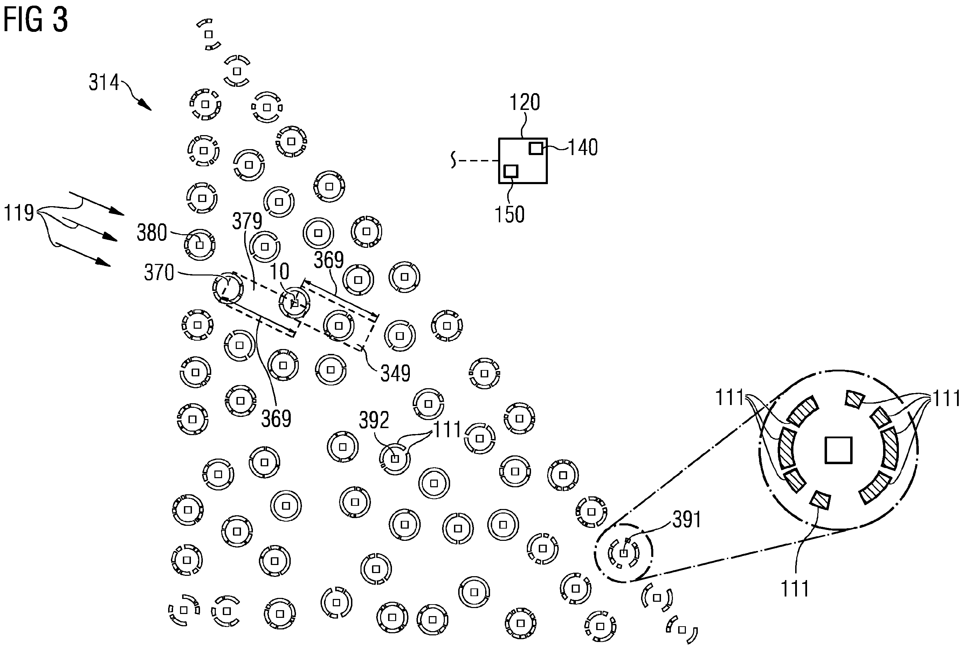

**Figure 1** shows a wind turbine 10 for generating electricity. The wind turbine 10 comprises a tower 11 which is mounted on the ground 16 at one end. Alternatively, the wind turbine 10 may be a floating wind turbine. At the opposite end of the tower 11 there is mounted a nacelle 12. The nacelle 12 is usually mounted rotatable about the tower 11, which is referred to as comprising a yaw axis substantially perpendicular to the ground 16. The nacelle 12 typically accommodates the generator of the wind turbine and the gear box (if the wind turbine is a geared wind turbine). Furthermore, the wind turbine 10 comprises a wind rotor 13 which is rotatable about a rotor axis Y. When not differently specified, the terms axial, radial and circumferential in the following are made with reference to the rotor axis Y. The wind rotor 13 is capable to rotate about the rotor axis Y and to transfer the rotational energy to an electrical generator (not shown) and comprises at least one blade 20 (in the embodiment of Figure 1, the wind rotor comprises three blades 20, of which only two blades 20 are visible). The blades 20 extend substantially radially with respect to the rotational axis Y. Each rotor blade 20 is usually mounted pivotable to the rotor 13, in order to be pitched about respective pitch axes X. Each rotor blade 20 is mounted to the wind rotor 13 at its root section 21. The root section 21 is opposed to the tip section 22 of the rotor blade 20. The wind turbine 10 may be comprised in an onshore or offshore wind park 314 (illustrated in Figure 3) comprising a plurality of wind turbines 10.

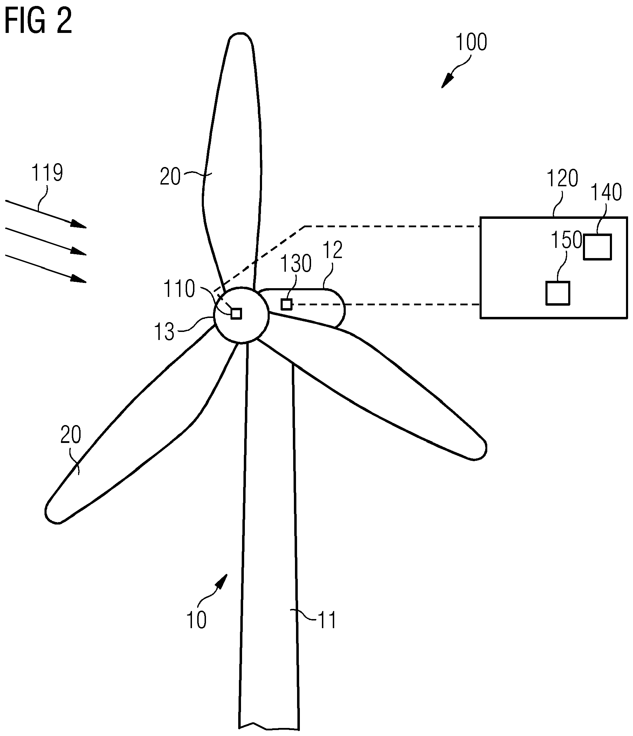

**Figure 2** shows a wind turbine 10 and a control system 100 according to an exemplary embodiment. The wind turbine 10 comprises a wind direction measuring device 110 mounted to the nacelle 13 of the wind turbine 10. Distanced to the wind turbine 10 a determining device 120 is positioned which is interconnected with a plurality of wind turbines 10, 360, 370, 380 in the wind park 314. In Figure 2 solely one of the plurality of wind turbines 10, 360, 370, 380 is illustrated. The wind direction measuring device 110 is configured for measuring the absolute wind direction at the nacelle 13. After measuring the absolute wind direction, the wind direction measuring device 110 transmits the measured absolute wind direction to the determining device 120. A communicative link is illustrated by the dashed line in Figure 2 and may be performed by a wired or wireless connection.

The determining device 120 is configured for determining whether the absolute wind direction is within a defined wind direction value range 111 (illustrated in Figure 3), wherein the defined wind direction value range 111 comprises at least one sector in which at least one other downstream wind turbine 360 (shown in Figure 3) is positioned in a wake region 349 (shown in Figure 3) caused by the wind turbine 10, wherein the other downstream wind turbine 360 is positioned downstream of the wind turbine 10 relative to a wind direction of an incoming wind field 119, and is positioned within a maximum distance of consideration 369 (shown in Figure 3) with respect to the wind turbine 10 and/or the wind turbine 10 is positioned in a wake region 379 caused by at least one other upstream wind turbine 370 which is positioned upstream of the wind turbine 10 relative to the wind direction of the incoming wind field 119, and which is positioned within the maximum distance of consideration 369 (shown in Figure 3) with respect to the wind turbine 10 (shown in Figure 3).

A wake region determining device 140 is provided next to the determining device 120. The wake region determining device 140 is configured for determining the wake region 349, 379 caused by each of the plurality of wind turbines 10, 360, 370, 380 for each wind direction of the incoming wind field 119 based on a position of each of the plurality of wind turbines 10, 360, 370, 380 in the wind park 314, based on a model describing a direction and an expansion of a wake region 349, 379 of each of the plurality of wind turbine 10, 360, 370, 380. Further, the wake region determining device 140 is configured for determining the defined wind direction value range 111 for each of the plurality of wind turbines 10, 360, 370, 380, and for communicating the defined wind direction value range 111 to the determining device 120. The wake region determining device 140 communicates the defined wind direction value range 111 to the determining device 120. The result whether the absolute wind direction is outside the defined wind direction value range 111 or within the defined wind direction value range 111 is transmitted from the determining device 120 to a controller 130 mounted on the nacelle 12. The communicative link is illustrated by the dashed line in Figure 2 and may be formed by a wired or wireless connection. The controller 130 is configured for applying either the first control setting or the second control setting based on whether the absolute wind direction is within or outside of the defined wind direction value range 111.

Furthermore, the control system 100 comprises an actuation device 150 which is configured for determining, if the absolute wind direction is outside the defined wind direction value range 111, a wind speed of an incoming wind field 119 at the wind turbine 10 and/or a turbulence density level at the wind turbine 10. Then the controller 130 applies the first control setting if the wind speed is below a predetermined wind speed threshold and/or the turbulence density level is below a predetermined turbulence density level threshold. Further, if the wind speed is above the predetermined wind speed threshold and/or the turbulence density level is above the predetermined turbulence density level threshold, the controller 130 applies the second control setting. As illustrated in Figure 2, the actuation device 150 is arranged next to the determining device 120 and the wake region determining device 140 and may be connected to the controller 130 via the same or another communication link which interconnects the determining device 120 and the controller 130. Also only one actuation device 150 is shown in Figure 2 which is connected to each of the wind turbines 10, 360, 370, 380 in the wind park 314, it may be understood that further actuation devices may be arranged in the wind park 314.

**Figure 3** shows a wind park 314 according to an exemplary embodiment. The wind park 314 comprises a plurality of wind turbines comprising the wind turbine 10, the downstream wind turbine 360 and the upstream wind turbine 370. The downstream wind turbine 360 is positioned downstream of the wind turbine 10 with respect to the wind direction of the incoming wind field 119 and is positioned within the maximum distance of consideration 369 with respect to the wind turbine 10. Further, the wind turbine 10 is positioned within the wake region 379 caused by the upstream wind turbine 370 and the downstream wind turbine 360 is positioned within the wake region 349 caused by the wind turbine 10. Hence, the determining device 120 determines, particularly by means of the wake region determining device 140, that the absolute wind direction of the incoming wind field 119 is within the defined wind direction value range 111. Subsequently, the determining device 120 communicates that to the controller 130 of the wind turbine 10 and the controller 130 of the downstream wind turbine 360. The controller 130 of the wind turbine 10 and the controller 130 of the downstream wind turbine 360 each apply the second control setting to the wind turbine 10 respectively the downstream wind turbine 360.

A further wind turbine 380 is positioned such that the further wind turbine 380 is not waked by any other wind turbine and is not waking the upstream wind turbine 370 and also no other wind turbine. Therefore, the controller 130 of the further wind turbine 380 applies the first control setting to the further wind turbine 380.

In Figure 3 the defined wind direction value range 111 is illustrated at each of the wind turbines. As shown in the enlarged detail, the defined wind direction value range 111 comprises eight sectors in which the wind turbine 391 is either waked by another wind turbine or is waking another wind turbine. At the wind turbine 392 positioned further in the middle of the wind park 314, the defined wind direction value range 111 comprises two sectors which are together larger than the eight sectors at wind turbine 391. Being together larger may particularly denote that the defined wind direction value range 111 of the wind turbine 392 extends over a larger angular extent than the defined wind direction value range 111 at the wind turbine 391. In other words, the wind turbines positioned in the middle of the wind park 314 have fewer wind directions at which they may be operated with the first control setting which comprises an increased thrust coefficient compared to the second control setting.

Additionally, the determining device 120, the wake region determining device 140 and the actuation device 150 are integrally provided and configured on a wind park level. The communication link from the determining device 120, the wake region determining device 140 and the actuation device 150 is illustrated as a dashed line in Figure 3.

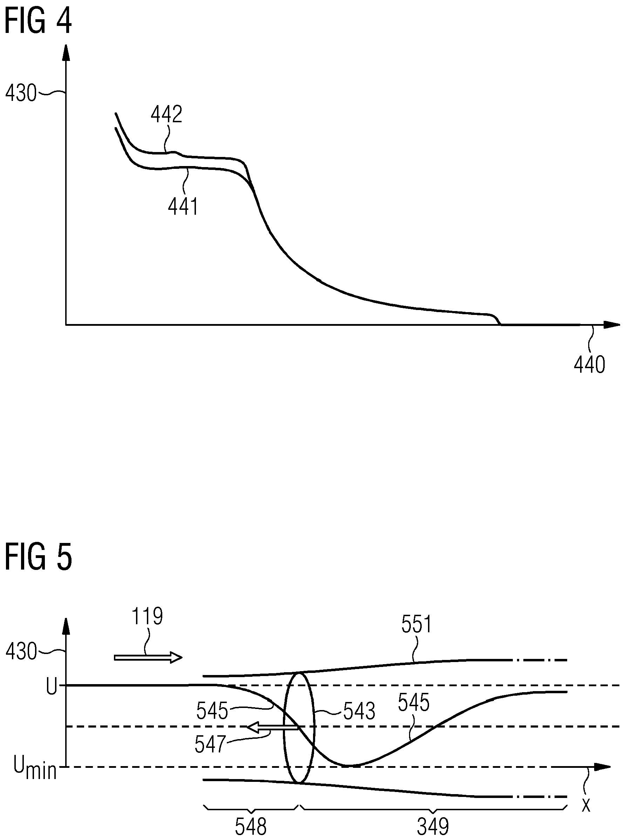

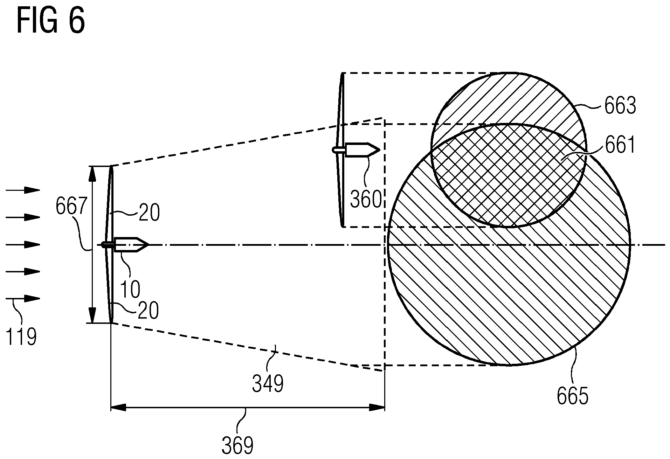

**Figure 4** shows graphs 441, 442 of the thrust coefficient dependent on the wind speed. In Figure 4, the coordinate system has the thrust coefficient as ordinate 444 and the wind speed as abscissa 443. A first graph 441 shows the thrust coefficient dependent on the wind speed if the controller 130 applies the first second control setting to the wind turbine 10. A second graph 442 illustrates the thrust coefficient dependent on the wind speed if the controller 130 applies the first control setting to the wind turbine, wherein the first control setting comprises an increased thrust coefficient at a specific wind speed of an incoming wind field 119 (shown in Figures 5 and 6) compared to the second control setting.

**Figure 5** schematically shows wind flow characteristics upstream and downstream a wind turbine 10 (not illustrated in Figure 5) causing a wake region 349. A wind flow is schematically illustrated upstream and downstream of a wind turbine 10 having rotor blades 20 rotating in a rotor disc 543, i.e., the disc swept by each complete rotation of each blade 20 about the rotor axis Y. Upstream of the rotor disc 543, an incoming wind field 119 has a free stream wind velocity U which then varies in dependence of a lateral position x according to a first curve 545 for a first turbulence in a coordinate system having as ordinate 444 wind speed and having as abscissa 443 lateral extent x. Immediately upstream of the rotor disc 543 an axial induction zone 548 is defined. The axial induction zone 548 describes the region where the inflow wind speed decelerates due to the extraction of kinetic energy from the free stream wind flow. The rotor disc 543 including the rotating rotor blades 20 exerts a force 547 on the incoming wind field 119 resulting in a decrease of the wind velocity (illustrated as the curve 545 in Figure 5) downstream of the rotor disc 543. The wind velocity (illustrated as the curve 545 in Figure 5) reaches downstream of the rotor disc 543 a minimum Uₘᵢₙ and increases then within a wake region 349 substantially towards the upstream wind velocity U. A region 551 defines a shape of the wake 349.

**Figure 6** schematically shows a wake region 349 of a wind turbine 10 influencing a downstream wind turbine 360. The wind turbine 10 is positioned upstream of the downstream wind turbine 360. The incoming wind field 119 hits the wind turbine 10 and the blades 20 extract energy from the incoming wind field 119. The blades 20 have a rotor diameter 667 defining the swept disc 543 (shown in Figure 5). The wake region 349 is assumed to expand linear with the distance to the wind turbine 10. The maximum distance of consideration 369 is schematically shown in Figure 5 to be downstream (behind seen from the wind turbine 10) of the downstream wind turbine 360. At the position of the downstream wind turbine 360, it is evaluated whether there is an overlap 661 of a wake region cross-sectional area 665 of the wind turbine 10 and a swept disc 663 of the downstream wind turbine 360. If the overlap 661 exists, the downstream wind turbine 360 is waked by the wake region 349 caused by the wind turbine 10.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Control system (100) for controlling at least one wind turbine (10) of a plurality of wind turbines (10, 360, 370, 380) in a wind park (314), the control system (100) comprising
a wind direction measuring device (110) configured for measuring an absolute wind direction at the wind turbine (10),
a determining device (120) configured for determining whether the absolute wind direction is within a defined wind direction value range (111),
wherein the defined wind direction value range (111) comprises at least one sector in which
at least one other downstream wind turbine (360) is positioned in a wake region (349) caused by the wind turbine (10), wherein the other downstream wind turbine (360) is positioned downstream of the wind turbine (10) relative to a wind direction of an incoming wind field (119), and is positioned within a maximum distance of consideration (369) with respect to the wind turbine (10) and/or
the wind turbine (10) is positioned in a wake region (379) caused by at least one other upstream wind turbine (370) which is positioned upstream of the wind turbine (10) relative to the wind direction of the incoming wind field (119), and which is positioned within the maximum distance of consideration (369) with respect to the wind turbine (10), and
a controller (130) configured for applying a first control setting to the wind turbine (10) if the absolute wind direction is outside of the defined wind direction value range (111) or
a second control setting to the wind turbine (10) if the absolute wind direction is within the defined wind direction value range (111),
wherein the first control setting is different from the second control setting.

2. The control system (100) according to claim 1,
wherein the first control setting comprises an increased thrust coefficient, particularly at a given wind speed of an incoming wind field (119), compared to the second control setting.

3. The control system (100) according to claim 1 or 2,
wherein the first control setting comprises a first set point of a blade pitch angle, and the second control setting comprises a second set point of the blade pitch angle, and wherein the first set point and the second set point are different.

4. The control system (100) according to claim 3,
wherein the first set point is smaller than the second set point.

5. The control system (100) according to any one of the claims 1 to 4,
wherein the first control setting comprises a further first set point of a rotor speed, and the second control setting comprises a further second set point of the rotor speed, and wherein the further first set point and the further second set point are different.

6. The control system (100) according to claim 5,
wherein the further first set point is larger than the further second set point.

7. The control system (100) according to any one of the claims 1 to 6, further comprising a wake region determining device (140),
wherein the wake region determining device (140) is configured for determining the wake region (349, 379) caused by each of the plurality of wind turbines (10, 360, 370, 380) for each wind direction of the incoming wind field (119) based on a position of each of the plurality of wind turbines (10, 360, 370, 380) in the wind park (314), and
based on a model describing a direction, an expansion and/or a turbulence intensity of a wake region (349, 379) of each of the plurality of wind turbines (10, 360, 370, 380),
wherein the wake region determining device (140) is further configured for determining the defined wind direction value range (111) for each of the plurality of wind turbines (10, 360, 370, 380) based on the wake region (349, 379) caused by each of the plurality of wind turbines (10, 360, 370, 380) for each wind direction of the incoming wind field (119), and wherein the wake region determining device (140) is further configured for communicating the defined wind direction value range (111) to the determining device (120).

8. The control system (100) according to claim 7,
wherein the model describing a direction, an expansion and/or a turbulence intensity of a wake region (349, 379) is a Jensen wake model or a Gaussian wake model.

9. The control system (100) according to any one of the claims 1 to 8,
wherein the maximum distance of consideration (369) comprises 50 times a rotor diameter (667) of the wind turbine (10), particularly comprises 25 times a rotor diameter (667) of the wind turbine (10).

10. The control system (100) according to any one of the claims 1 to 9,
wherein the wind direction measuring device (110) is configured for experimentally measuring the absolute wind direction,
wherein particularly the wind direction measuring device (110) comprises at least one of a group consisting of a wind direction sensor, an anemometer, and a lidar.

11. The control system (100) according to any one of the claims 1 to 10, further comprising an actuation device (150), wherein the actuation device (150) is configured for determining, if the absolute wind direction is outside the defined wind direction value range (111), a wind speed of an incoming wind field (119) at the wind turbine (10) and/or a turbulence intensity level at the wind turbine (10),
wherein the controller (130) is further configured for applying the first control setting if the wind speed is below a predetermined wind speed threshold and/or the turbulence density level is below a predetermined turbulence density level threshold, and
wherein the controller (130) is further configured for applying the second control setting if the wind speed is above the predetermined wind speed threshold and/or the turbulence density level is above the predetermined turbulence density level threshold.

12. A wind park (314) comprising a plurality of wind turbines (10, 360, 370, 380), and
a control system (100) according to any one of the claims 1 to 11.

13. A method of controlling at least one wind turbine (10) of a plurality of wind turbines (10, 360, 370, 380) in a wind park (314),
measuring an absolute wind direction at the wind turbine (10),
determining whether the absolute wind direction is within a defined wind direction value range (111),
wherein the defined wind direction value range (111) comprises at least one sector in which
at least one other downstream wind turbine (360) is positioned in a wake region (349) caused by the wind turbine (10), wherein the other downstream wind turbine (360) is positioned downstream of the wind turbine (10) relative to a wind direction of an incoming wind field (119), and is positioned within a maximum distance of consideration (369) with respect to the wind turbine (10) and/or
the wind turbine (10) is positioned in a wake region (379) caused by at least one other upstream wind turbine (370) which is positioned upstream of the wind turbine (10) relative to a wind direction of an incoming wind field (119), and which is positioned within the maximum distance of consideration (369) with respect to the wind turbine (10), and
applying a first control setting to the wind turbine (10) if the absolute wind direction is outside of the defined wind direction value range (111) or
applying a second control setting to the wind turbine (10) if the absolute wind direction is within the defined wind direction value range (111),
wherein the first control setting is different from the second control setting.
